(19) Europäisches Patentamt

European Patent Office

Office européen des brevets

(11) **EP 0 413 934 B1**

(12) **EUROPEAN PATENT SPECIFICATION**

(45) Date of publication and mention
of the grant of the patent:
**14.08.1996 Bulletin 1996/33**

(51) Int Cl.6: **H04B 3/14**

(21) Application number: **90112346.3**

(22) Date of filing: **28.06.1990**

(54) **Transmission line frequency equalizer**

Frequenzentzerrer für eine Übertragungsleitung

Egaliseur de fréquence pour ligne de transmission

(84) Designated Contracting States:
**DE FR GB**

(30) Priority: **30.06.1989 JP 168377/89**

(43) Date of publication of application:
**27.02.1991 Bulletin 1991/09**

(73) Proprietor: **SONY CORPORATION
Tokyo (JP)**

(72) Inventor: **Eguchi, Takeo, C/o Sony Corporation
Shinagawa-ku, Kanagawa (JP)**

(74) Representative:
**Schmidt-Evers, Jürgen, Dipl.-Ing. et al
Patentanwälte
Mitscherlich & Partner,
Postfach 33 06 09
80066 München (DE)**

(56) References cited:
**AT-A- 356 712**          **US-A- 3 671 886**
**US-A- 4 689 805**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates generally to frequency characteristic correcting apparatus, and more particularly is directed to a frequency equalizer in which circuits are formed in a so-called building block fashion.

When an electrical signal or an optical signal is transmitted through a signal transmission system such as a coaxial cable or an fiber optics, the deterioration of the frequency characteristic in which the delay time and attenuation amount are changed due to the frequency of that signal occurs so that the waveform of that signal comes to change from the waveform of the input signal gradually. Accordingly, when a signal is transmitted by employing such signal transmission system, a waveform equalizing circuit (frequency characteristic correcting circuit) is utilized to correct the deterioration of the frequency characteristic so that the waveform of the original input signal is recovered.

Roughly classified, there are known two waveform equalizing circuits:

1. Circuit employing a varicap diode:
This circuit is to approximately compensate the deterioration of the frequency characteristic due to a coaxial cable or the like by connecting in series emitter peaking circuits, each formed of a varicap diode.
2. Circuit employing a high speed switching element:
This circuit is to approximately achieve a desired frequency characteristic by the combination of amplifiers having different frequency characteristics by high speed switching elements such as PIN diodes and the like.

of the prior-art waveform equalizing circuits, the circuit employing the varicap diode in item 1 can not obtain a desired characteristic due to the fluctuation of the characteristic of the varicap diode without difficulty and also the number of adjustement items for the circuit is increased. Further, the varicap diode is not incorporated but is connected from the outside so that the whole of the circuit arrangement can not be fabricated as an integrated circuit (IC).

According to the circuit employing the high speed switching element in item 2, generally, a range in which the frequency characteristic can be varied is small, and approximate error can not be kept uniform over the whole variable range without difficulty. Furthermore, the element having a special switching characteristic can not be formed in the integrated circuit without difficulty, and this circuit can not be suitably fabricated as an integrated circuit similarly to the circuit in item 1.

From US-A 4 689 805 an equalizing circuit is known. This equalizing circuit has signal processing means provided with an amplifier having its own frequency characteristic which receives an input signal via first input means. This amplifier supplies its amplified output signal to a multiplier where this amplified output signal is multiplied with a control signal which is derived from the final output signal of the signal processing means. The result of multiplying is supplied to an adder in which the output signal of the multiplier is added to the input signal of the processing means. The output signal of this adder functions as output signal of the signal processing means.

From AT-A-356 713 a circuit is known with first input means from which the signal which has to be processed is supplied to an adder and to a multiplier. The multiplier multiplies the input signal with an oscillating signal coming from an oscillator thus, the multiplier functions as modulator which generates an amplitude modulated signal. This amplitude modulated signal is supplied to an amplifier having an own frequency characteristic from which the amplified amplitude modulated signal is supplied to said adder. The resulting signal of the adder is the output signal of the signal processing means.

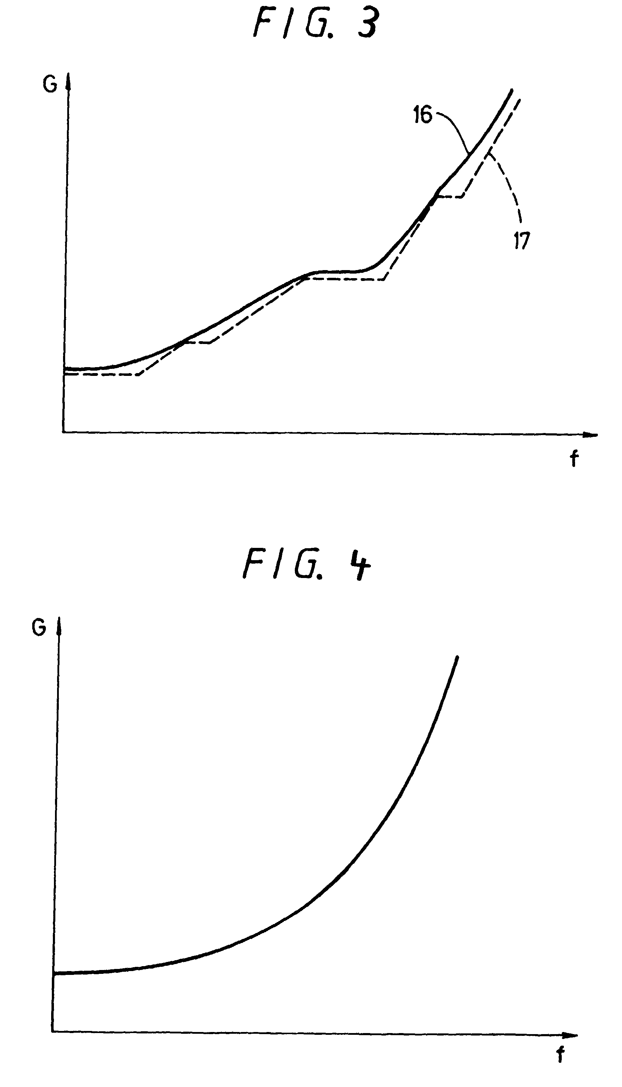

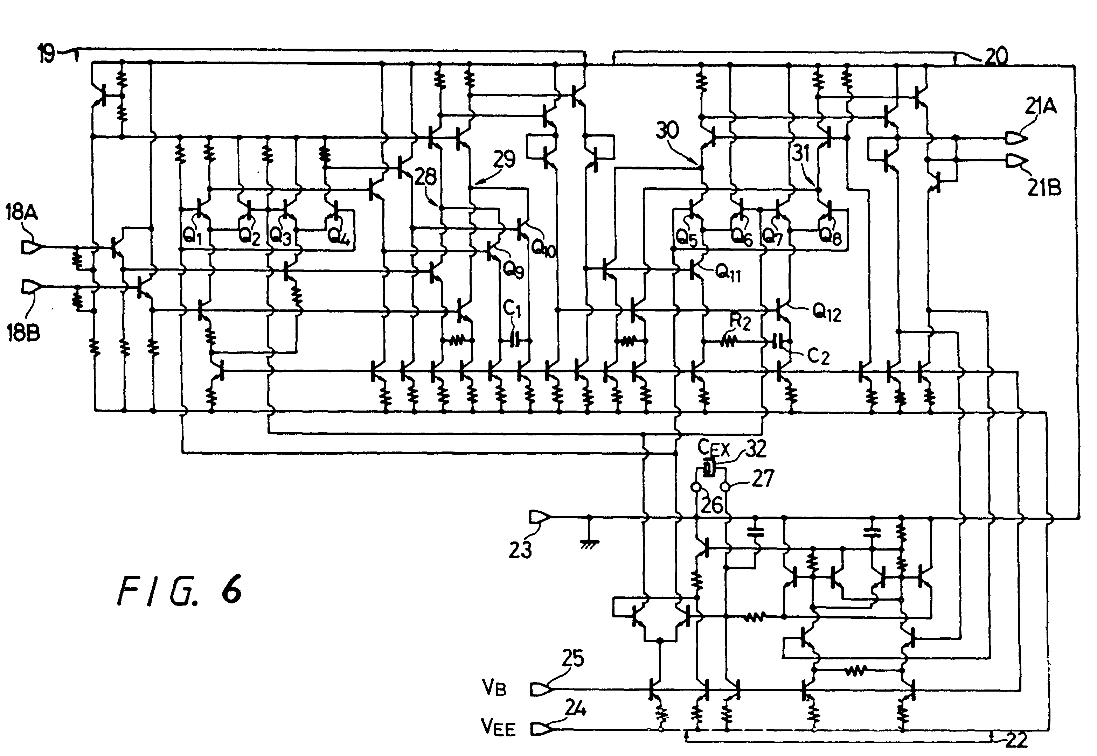

From US-A-3 671 886 an automatic gain control circuitry for a transmission line is known. This circuitry uses multistage variable equalizing networks. Furthermore, a peak value detector is provided supplying a signal to the control circuit which forms via the resistance 64, 63, 62, as seen in Fig. 3, or via the resistance 88, 89, 90, as seen in Fig. 4, three different output signals for a separate control of each stage of the transmission line.

It is the object of the present invention to provide a frequency equalizer which can perform a desired frequency characteristic correction with ease.

The features and advantages of the present invention will be apparent in the following detailed description of the preferred embodiments when read in conjunction with the accompanying drawings, in which like reference numerals are used to identify the same or similar parts in the several views.

Fig. 1 is a schematic diagram showing a fundamental circuit of a first embodiment of a frequency equalizer according to the present invention;
Fig. 2 is a schematic diagram showing a frequency equalizer formed by connecting the fundamental circuits shown in the example of Fig. 1 in series;
Figs. 3 and 4 are graphs of a relationship between a frequency and a gain, and to which reference will be made in explaining an operation of the present invention;
Fig. 5 is a circuit diagram showing a practical example of the fundamental circuit shown in the example of Fig. 1;
Fig. 6 is a circuit diagram of a more detailed embodiment with an equalizing circuit used to transmit coaxial cable data;

Fig. 7 is a block diagram of the detailed embodiment ; and

Figs. 8A, 8B, Figs. 9A, 9B, Figs. 10A, 10B and Figs. 11A, 11B are schematic representations used to explain an operation of the detailed example shown in Fig. 6, respectively.

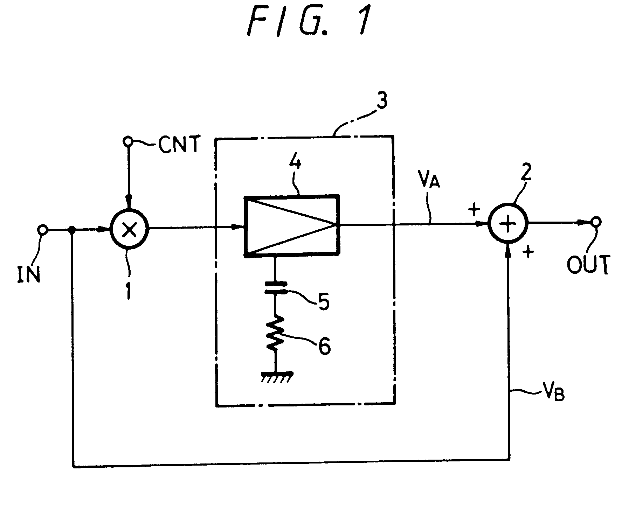

An embodiment of a frequency equalizer according to the present invention will hereinafter be described with reference to Figs. 1 to 5

Fig. 1 shows a fundamental circuit of this embodiment.

Referring to Fig. 1, an input signal applied to an input terminal IN is supplied to one input terminal of a multiplying circuit 1 and to one input terminal of an adding circuit 2. A control signal applied to a control terminal CNT is supplied to the other input terminal of the multiplying circuit 1. In Fig. 1, a one-dot chain line block 3 designates an amplifier wherein reference numeral 4 designates a linear amplifying circuit. The linear amplifying circuit 4 is grounded via a CR filter which is formed by connecting a capacitor 5 and a resistor 6 in series. In that case, by properly selecting the capacitance value of the capacitor 5 and the resistance value of the resistor 6 or the like to be pre-determined values, it is possible to give the amplifier 3 its own frequency characteristic.

An output signal of the multiplying circuit 1 is supplied to the amplifier 3, from which there is derived a first signal $V_A$. The first signal $V_A$ is supplied to the other input terminal of the adding circuit 2. Although the adding circuit 2 is already supplied at one input terminal thereof with the input signal that input signal may be supplied to one input terminal of the adding circuit 2 via an amplifier having a flat frequency characteristic (not shown). This input signal supplied to one input terminal of the adding circuit 2 (the input signal itself in this embodiment) is referred to as a second signal $V_B$. The first and second signals $V_A$ and $V_B$ are added by the adding circuit 2, and the added output from the adding circuit 2 is fed to an output terminal OUT.

Since the amplifier 3 in the fundamental circuit shown in the example of Fig. 1 involves the CR filter, a transfer function A of the amplifier 3 can be expressed by a bilinear expression. More precisely, $\omega$ assumes an angular frequency and a, b, c and d assume coefficients. Then, the transfer function A can be expressed by the following equation.

$$A = \frac{aj\omega + c}{bj\omega + d} \tag{1}$$

Accordingly, the transfer function A includes one zero point - c/a and one pole - d/b. Then, K assumes a coefficient to be multiplied in the multiplying circuit 1 and H assumes the total transfer function of the fundamental circuit in this embodiment. The whole transfer function H can be expressed as follows.

$$H = 1 + K\frac{aj\omega + c}{bj\omega + d} \tag{2}$$

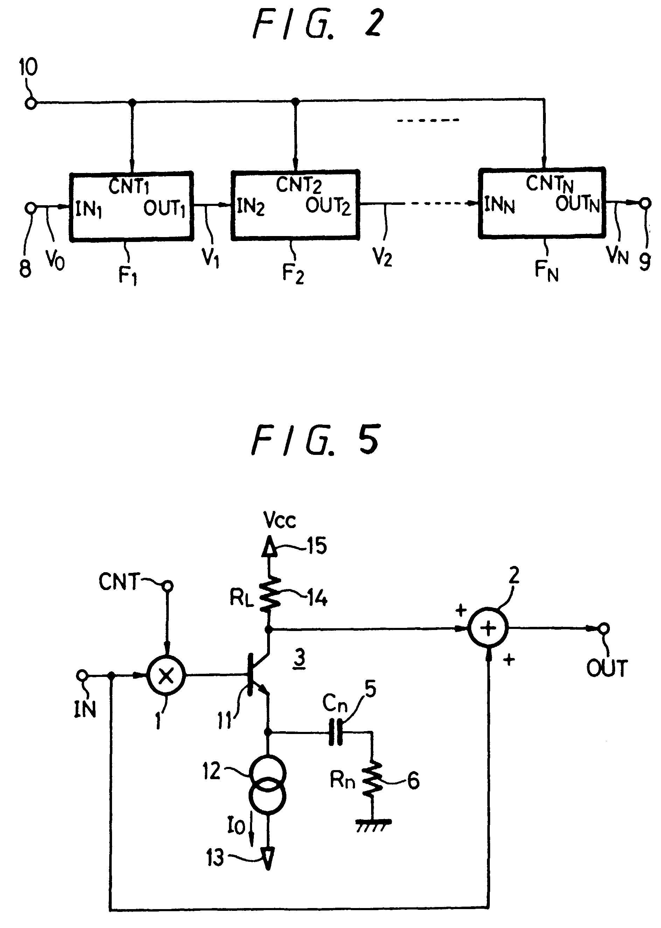

In this embodiment, N fundamental circuits shown in Fig. 1 are connected in cascade as shown in Fig. 2 where N is a positive integer larger than 2.

In Fig. 2 reference letters $F_1$ to $F_N$ designate fundamental circuits having different frequency characteristics (or the same characteristic), respectively. As shown in Fig. 2, an output terminal $OUT_1$ of the fundamental circuit $F_1$ is connected to an input terminal $IN_2$ of the fundamental circuit $F_2$, and an output terminal $OUT_2$ of the fundamental circuit $F_2$ is connected to an input terminal of a fundamental circuit $F_3$ (not shown). The remaining fundamental circuits are connected in the same manner, though not shown.

In Fig. 2 reference numeral 8 denotes an input terminal, 9 an output terminal and 10 a common control terminal, respectively. Referring to Fig. 2, the input terminal 8 is connected to the input terminal $IN_1$ of the fundamental circuit $F_1$, the output terminal $OUT_N$ of the fundamental circuit $F_N$ is connected to the output terminal 9 and the control terminal 10 is commonly connected to the control terminals $CNT_1$ to $CNT_N$ of the fundamental circuits $F_1$ to $F_N$.

When a signal $V_0$ is supplied to the input terminal 8, the signal $V_0$ is supplied to and processed by the fundamental circuits $F_1$ to $F_N$ so that they are corrected to signals $V_1$ to $V_N$. The finally obtained signal $V_N$ is fed through the output terminal 9 to the succeeding processing circuit (not shown). Further, in this embodiment, a control signal corresponding to the coefficient K is supplied to the control terminal 10, whereby the multiplication of the coefficient K is commonly carried out in the multiplying circuits in the fundamental circuits $F_1$ to $F_N$. Accordingly, assuming that Hn represents the transfer function of the fundamental circuit Fn (n = 1, ..., N) in accordance with the equation (2), the transfer function Hn is expressed as follows.

$$Hn = 1 + K\frac{a_n j\omega + c_n}{b_n j\omega + d_n}$$

$$= 1 + Kg_n\,(\omega) \tag{3}$$

In the equation (3), $g_n(\omega)$ represents, in principle, a function having one zero point and one pole, wherein $a_n = 0$ yields no zero point, $b_n = 0$ yields no pole and $a_n = b_n = 0$ yields neither zero point nor pole. Therefore, in the embodiment of Fig. 2, assuming that $H_0$ represents a total transfer function which means a transfer function between the signals $V_0$ and $V_N$, then the total transfer function $H_0$ is expressed by using the transfer function Hn in the equation (3) as follows:

$$H_0 = H_1 \cdot H_2 \ldots\ldots H_N$$

$$= 1 + Kf_1(\omega) + K^2f_2(\omega) + \ldots + K^Nf_N(\omega) \qquad (4)$$

In the above-described equation (4), $f_j(\omega)$ (j = 1, 2, ..., N) represents a j-order function of $g_n(\omega)$ (n = 1, 2, ..., N), and $f_j(\omega)$ is given j zero points and j poles at maximum.

An operation of the fundamental circuit shown in Fig. 3 will be described.

The total transfer function $H_0$ is expressed by the equation (4) so that, when the value of the coefficient K is selected to be, for example, zero, the total transfer function can be determined as 1 (i.e., completely flat frequency characteristic). Further, when the value of the coefficient K is selected to be 1, the total transfer function $H_0$ can be determined so as to fully involve $f_1(\omega)$ to $f_N(\omega)$ of the equation (4) in the perfect form. Therefore, according to this embodiment, the common coefficient K to the respective fundamental circuit $F_1$ to $F_N$ is selected in a wide variety of values ranging from a negative value to positive value, whereby the frequency characteristic in the overall circuit arrangement can be determined substantially desirably with great ease.

For example, let it be assumed that the fundamental circuit shown in Fig. 2 is applied to a waveform equalizing circuit which corrects the signal deterioration in the signal transmitting system and the magnetic recording and/or reproducing apparatus. Also, let it be assumed that a gain-frequency characteristic necesary for equalizing the signal waveform is represented in advance by a full line function 16 in Fig. 3. In that case, the function 16 is approximated by a polygonal line function 17 in which an inclination of a straight line portion is ± 6 dB/oct, ± 12 dB/oct, + 18 dB/oct, ... Then, the number N of the fundamental circuits $F_1$ to $F_N$ is determined and the zero points and the poles of the fundamental circuits $F_1$ to $F_N$ are determined to be pre-determined values so as to provide the function 17.

Further, the correcting circuit shown in Fig. 2 is formed as a so-called building block system only by connecting the fundamental circuits $F_1$ to $F_N$ and does not employ special elements such as varicap diodes and high speed switching elements which are not suitable for being fabricated into an integrated circuit. Accordingly, the correcting circuit shown in Fig. 2 can be manufactured by forming a circuit having a pre-determined pattern in a step-and-repeat fashion. There is then the advantage that the circuit of this embodiment can be suitably fabricated into the integrated circuit.

Furthermore, the frequency characteristic correcting circuit of this embodiment can be applied to a so-called video special effect apparatus. For example, only the fundamental circuits $F_1$ and $F_2$ are used as the fundamental circuits in the embodiment shown in Fig. 2 and transfer functions $H_1$ and $H_2$ of the fundamental circuits $F_1$ and $F_2$ are expressed by the following equations:

$$H_1 = 1 + Kaj\omega, \; H_2 = 1 - Kaj\omega \qquad (5)$$

In that case, the total transfer function H is expressed as

$$H = H_1 \cdot H_2 = 1 + (Ka)^2 \omega^2 \qquad (6)$$

Accordingly, a corresponding gain-frequency characteristic becomes as shown in Fig. 4. The characteristic shown in Fig. 4 emphasizes a high frequency component so that, when a video signal is processed, a contour of a video image is emphasized.

Fig. 5 shows more in detail the fundamental circuit shown in Fig. 1 wherein like parts corresponding to those of Fig. 1 are marked with the same references and therefore need not be described in detail.

Referring to Fig. 5, the output signal of the multiplying circuit 1 is supplied to the base of an npn transistor 11, and the emitter of the npn transistor 11 is connected through a current source 12 of a current $I_0$ to a negative power source terminal 13. Simultaneously, the emitter of the npn transistor 11 is grounded via a capacitor 5 having a capacitance value Cn and a resistor 6 having a resistance value Rn. The collector of the npn transistor 11 is connected through a load resistor 14 having a resistance value $R_L$ to a positive power source terminal 15. A signal developed at the collector of the npn transistor 11, that is, the first signal $V_A$ is supplied to the other input terminal of the adding circuit 2. Other arrangements are the same as those of the embodiment shown in Fig. 1.

In Fig. 5, assuming that the output impedance of the multiplying circuit 1 is sufficiently low, the input impedance to the adding circuit 2 is sufficiently higher than the resistance value $R_L$ of the load resistor 14, the inside resistance of the current source 12 is infinite and that An represents the transfer function of the amplifier 3, then the transfer function An is expressed as follows:

$$An = \frac{R_L}{R_n + 1/(j\omega C_n)} = \frac{j\omega C_n R_L}{1 + j\omega C_n R_n}$$

$$= \frac{jZ_n}{1+jP_n} \qquad (7)$$

$$P_n = \omega C_n R_n, \; Z_n = \omega C_n R_L \qquad (8)$$

Accordingly, Hn assumes the transfer function of the overall circuit arrangement of the fundamental circuit shown in Fig. 5. Then, the equation (2) yields

$$Hn = 1 + \frac{K \cdot jZn}{1+jPn} \qquad (9)$$

where the value of the coefficient K falls in a range of $0 \le K \le 1$. In the embodiment shown in Fig . 5, by determining the capacitance value Cn and the resistance values Rn and $R_L$ in various manners, it is possible to obtain a desired frequency characteristic. In that case, the amplifier 3 shown in Fig. 5 corresponds with a half circuit of a differential amplifier, and in actual practice, a differential amplifier formed by the combination of two half circuits might be used.

A more detailed embodiment will be described hereinafter with reference to Figs. 6 to 11. In this detailed embodiment, the present invention is applied to a coaxial cable data transmission equalizing circuit for a coaxial cable through which a digital signal of approximately 270 Mbps for a digital video tape recorder (i.e., digital VTR) is transmitted. In this embodiment, $N = 2$ and $0 \le K \le 1$ are determined in the embodiment shown in Fig. 2 and the overall circuit arrangement is fabricated as an integrated circuit.

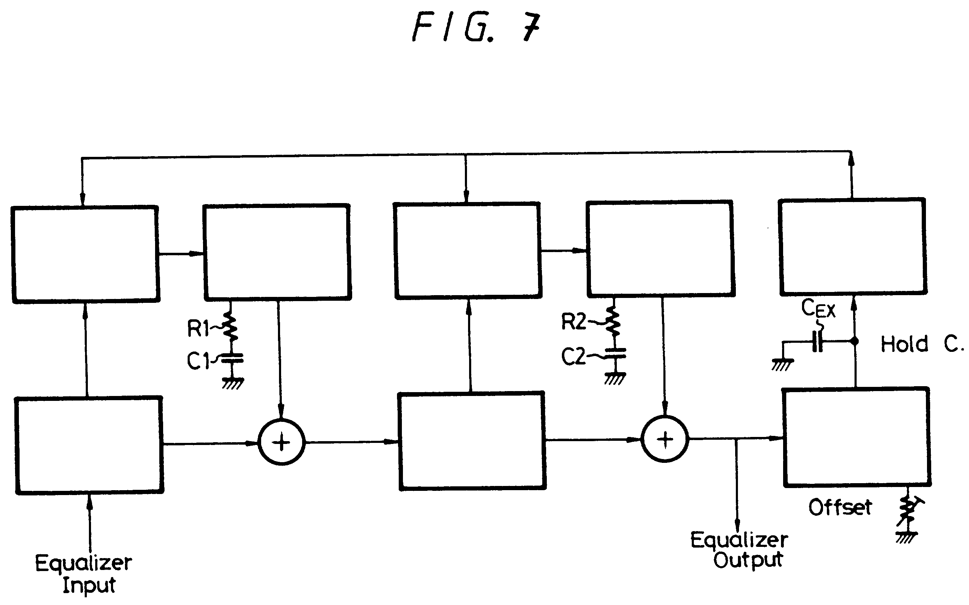

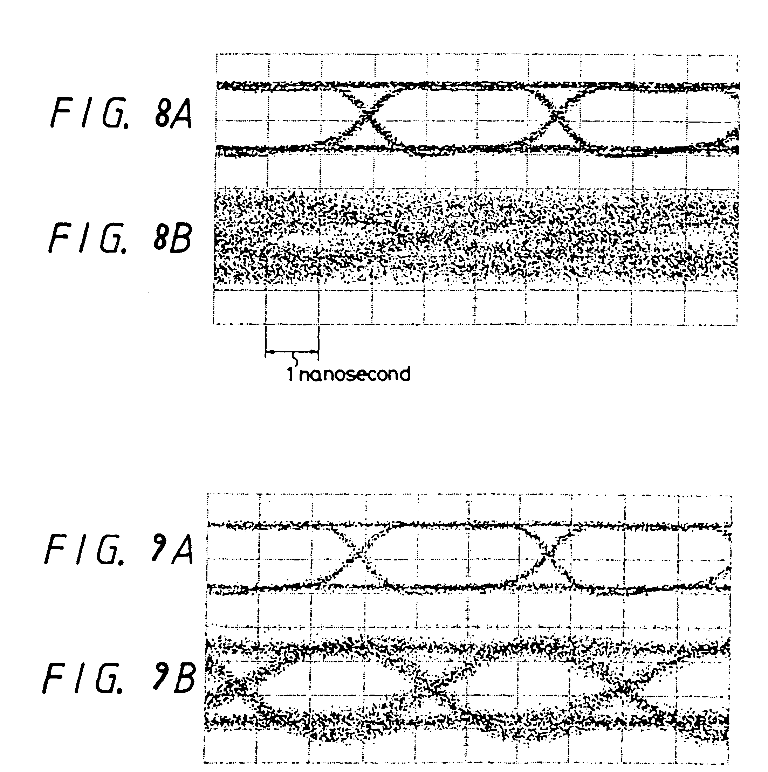

Fig. 6 shows a waveform equalizing circuit of this embodiment, and Fig. 8 shows a block diagram of the waveform equalizing circuit shown in Fig. 7.

In Fig. 6, reference numerals 18A and 18B designate input terminals to which there are supplied differential input signals, respectively. The differential input signals are supplied to a first stage equalizer 19 provided as the first fundamental circuit and differential output signals of the first stage equalizer 19 are supplied to a second stage equalizer 20 provided as the second fundamental circuit. Differential output signals of the second stage equalizer 20 are supplied through a pair of output terminals 21A and 21B to the succeeding signal processing circuit (not shown). Further, signals whose levels change with the differential output signals from the second stage equalizer 20 are supplied to a peak value detecting circuit 22. The peak value detecting circuit 22 holds a signal corresponding to the maximum value of the amplitude of the equalized output signal, which is the output signal of the second stage equalizer 20, and negatively feeds the same back to the respective multiplying circuit sections of the first and second equalizers 19 and 20. In the peak value detecting circuit 22, reference numerals 26 and 27 designate connecting terminals and a capacitor 32 having a capacitance value $C_{EX}$ for holding a peak value is interposed between these connecting terminals 26 and 27.

Further, in Fig. 6, reference numeral 23 denotes a ground terminal, 24 a negative power source terminal to which there is supplied a negative power supply source voltage $V_{EE}$ (e.g., - 5V), and 25 an input terminal to which there is supplied a bias voltage $V_B$ that is used to determine a pre-determined transistor bias current.

A fundamental operation of the equalizing circuit in the more detailed embodiment shown in Fig. 6 will be described next.

As shown in Fig. 6, in the first stage equalizer 19, transistors $Q_1$, $Q_2$, $Q_3$ and $Q_4$, constitute the multiplying circuit, and transistors $Q_9$, $Q_{10}$ constitute the amplifier. A frequency characteristic of this amplifier is given by a capacitor $C_1$ connected between the emitters of transistors $Q_9$ and $Q_{10}$. Signals are added at junctions 28 and 29 between the multiplying circuit and the amplifier.

In the second stage equalizer 20, transistors $Q_5$, $Q_6$, $Q_7$ and $Q_8$ constitute the multiplying circuit, and transistors $Q_{11}$ and $Q_{12}$ constitute the amplifier. A frequency characteristic of this amplifier is given by a capacitor $C_2$ and a resistor $R_2$ connected in series between emitters of transistors $Q_{11}$ and $Q_{12}$. Then, the signals are added at junctions 30 and 31 between the circuits. In this embodiment, in order that the amplitude of the differential output signal equalized becomes a constant value by the action of the peak value detecting circuit 22, the values of the coefficients K in the respective multiplying circuits in the first and second equalizers 19 and 20 are commonly controlled, with the result that a stable output signal can always be obtained regardless of the fluctuation of the input signal. This also means that, according to the detailed embodiment , an automatic equalizing circuit can be realized.

In order to check the effect of the equalizing circuit in the detailed embodiment shown in Fig. 6, experiments were carried out, in which a data signal of 270 Mbps is transmitted through a coaxial cable of 100 m in length. The experimental results are illustrated in Figs. 8A, 8B and in Figs. 9A, 9B, respectively.

Fig. 8A illustrates a waveform of an input signal to the coaxial cable, and Fig. 8B illustrates a waveform of an output signal dervied from the coaxial cable wherein the equalizing circuit of this embodiment is not utilized. The ranges in the longitudinal direction of Figs. 8A and 8B are different from each other. Fig. 9A substantially shows a waveform of an input signal to the coaxial cable, and Fig. 9B shows a waveform of an output signal from the coaxial cable wherein the equalizing circuit in this embodiment is utilized.

As is clear from the comparision of Figs. 8B and 9B, according to the equalizing circuit of this embodiment, the waveform of the input signal can be recovered substantially and accurately.

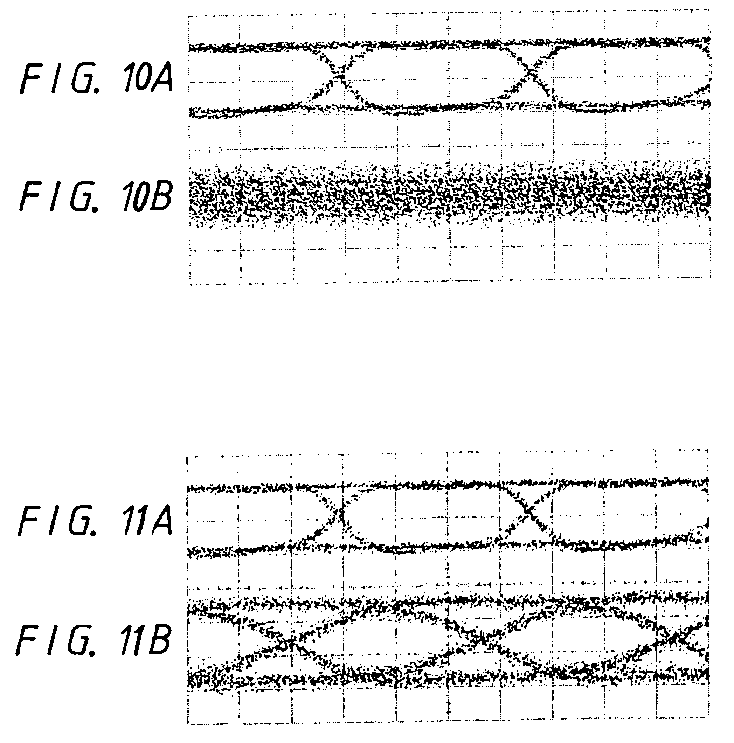

Similarly, the experiments were carried out, in which the digital signal is transmitted through the coaxial cable of 250 m in length, and the experimental results are illustrated in Figs. 10A, 10B and Figs. 11A, 11B, respectively. The comparison between Figs. 10B and 11B demonstrate that, according to the equalizing circuit of this embodiment, the waveform can be accurately equalized even when the length of the coaxial cable is 250 m.

As described above, for the signal transmission system such as the coaxial cable in which the frequency characteristic is monotonically deteriorated by the signal transmission in proportion to the length thereof, such signal transmission system can be treated with ease only by adjusting the constants of the capacitor and the resistor in the equalizing circuit in this embodiment. Therefore, in particular, the equalizing circuit in this embodiment can be utilized more effectivly. Further, since only the constants of the capacitor and the resistor are adjusted, the equalizing circuit can be fabricated as the integrated circuit with great ease, and both of analog signal and digital signal can be waveform-equalized by one integrated circuit.

According to the present invention, the frequency characteristics of the plurality of fundamental circuits are properly determined to be the pre-determined characteristics, respectively, whereby the desired frequency characteristics can be corrected totally with ease. Furthermore, since the circuit arrangement is formed of the building block system, the frequency characteristic correcting circuit of the present invention can be suitably fabricated into the integrated circuit.

## Claims

1. An apparatus for correcting a frequency characteristic of an input signal comprising :

   first input means (IN, 8) for receiving said input signal;

   second input means (CNT, 10) for receiving a control signal; and

   at least one signal processing means ($F_1$) including a first signal transmitting circuit (1, 3) including multiplying means (1) having a first input terminal for receiving said input signal from said first input means (IN, 8) and a second input terminal for receiving said control signal from said second input means (CNT, 10) for multiplying said input signal and said control signal to produce a multiplied signal, amplifying means (3) having a predetermined frequency characteristic and coupled with said multiplying means (1) for amplifying said multiplied signal to thereby produce a first signal, a second signal transmitting circuit (VB) having a flat frequency characteristic, and coupled with said first input means (IN, 8) to receive said input signal therefrom and thereby produce a second signal, and adding means (2) for adding said first and second signals to thereby produce a corrected signal, whereby a signal transmission characteristic of the apparatus may be controlled by said control signal for correcting a frequency characteristic of said input signal, and

   at least another of said signal processing means ($F_2$) coupled to said one signal processing means ($F_1$) in cascade such that said corrected signal of said adding means (2) in said one signal processing means ($F_1$) is input to said first input terminal of said multiplying means (1) in said other signal processing means ($F_2$), and said control signal from said second input means (CNT, 10) is commonly supplied to said second input terminal of said multiplying means (1) in each of said signal processing means ($F_1$, $F_2$).

2. An apparatus for correcting a frequency characteristic according to claim 1
   **characterized by**
   peak detecting means (22) for detecting a peak value of said signal processing circuits ($F_1$, $F_2$, ... $F_N$), an output of said peak detecting means (22) being supplied to said second input means (CNT, 10) as a control signal.

## Patentansprüche

1. Vorrichtung zur Korrektur einer Frequenzcharakteristik eines Eingangssignals, welche umfaßt:

   erste Eingangsmittel (IN, 8) zum Empfang des Eingangssignals;

   zweite Eingangsmittel (CNT, 10) zum Empfang eines Steuersignals; und

   mindestens eine Signalverarbeitungseinrichtung ($F_1$), welche enthält:
   eine erste Signalübertragungsschaltung (1, 3), welche eine Multiplikationseinrichtung (1) mit einem ersten Eingangsanschluß zum Empfang des Eingangssignals von den ersten Eingabemitteln (IN, 8) und einem zweiten Eingangsanschluß zum Empfang des Steuersignals von den zweiten Eingabemitteln (CNT, 10) zum Multiplizieren des Eingangssignals und des Steuersignals, um ein multipliziertes Signal zu erzeugen, eine Verstärkungseinrichtung (3) mit einer vorgegebenen Frequenzcharakteristik, welche mit der Multiplikationseinrichtung (1) zum Verstärken des multiplizierten Signals verbunden ist, um dadurch ein erstes Signal zu erzeugen, eine zweite Signalübertragungsschaltung (VB) mit einer flachen Frequenzcharakteristik, welche mit der ersten Eingabeeinrichtung (IN, 8) verbunden ist, um das Eingangssignal von dieser zu empfangen und dadurch ein zweites Signal zu erzeugen, und Additionsmittel (2) zum Addieren der ersten und zweiten Signale, um dadurch ein korrigiertes Signal zu erzeugen, wodurch eine Signalübertragungscharakteristik der Vorrichtung zur Korrektur einer Frequenzcharakteristik des Eingangssignals durch das Steuersignal gesteuert werden kann, enthält, und

mindestens eine weitere Signalverarbeitungseinrichtung ($F_2$), welche mit der einen Signalverarbeitungseinrichtung ($F_1$) in einer Kaskadenschaltung verbunden ist, so daß das korrigierte Signal der Additionseinrichtung (2) in der einen Signalverarbeitungseinrichtung ($F_1$) an dem ersten Eingangsanschluß der Multiplikationseinrichtung (1) in der anderen Signalverarbeitungseinrichtung ($F_2$) eingegeben wird und das Steuersignal von den zweiten Eingabemitteln (CNT, 10) gemeinsam dem zweiten Eingangsanschluß der Multiplikationseinrichtung (1) in jeder der Signalverarbeitungseinrichtungen ($F_1$, $F_2$) zugeführt wird.

2. Vorrichtung zur Korrektur einer Frequenzcharakteristik nach Anspruch 1,
**gekennzeichnet durch**
eine Spitzenwertdetektionseinrichtung (22) zur Feststellung eines Spitzenwertes der Signalverarbeitungsschaltungen ($F_1$, $F_2$, ... $F_N$), wobei ein Ausgangssignal der Spitzendetektionseinrichtung (22) den zweiten Eingabemitteln (CNT, 10) als ein Steuersignal zugeführt wird.

## Revendications

1. Appareil pour corriger une caractéristique de fréquence d'un signal d'entrée comprenant :

un premier moyen d'entrée (IN,8) pour recevoir ledit signal d'entrée ;
un second moyen d'entrée (CNT, 10) pour recevoir un signal de commande ; et
au moins un moyen de traitement de signal ($F_1$) comprenant un premier circuit de transmission de signal (1, 3) comprenant un moyen de multiplication (1) ayant une première borne d'entrée pour recevoir ledit signal d'entrée dudit premier moyen d'entrée (IN, 8) et une seconde borne d'entrée pour recevoir ledit signal de commande dudit second moyen d'entrée (CNT, 10) pour multiplier ledit signal d'entrée et ledit signal de commande pour produire un signal multiplié, un moyen d'amplification (3) ayant une caractéristique de fréquence prédéterminée et couplé audit moyen de multiplication (1) pour amplifier ledit signal multiplié pour produire ainsi un premier signal, un second circuit de transmission de signal (VB) ayant une caractéristique de fréquence plate et couplé audit premier moyen d'entrée (IN, 8) pour recevoir ledit signal d'entrée de celui-ci et pour produire ainsi un second signal, et un moyen d'addition (2) pour additionner lesdits premier et second signaux pour produire ainsi un signal corrigé, de sorte qu'une caractéristique de transmission de signal de l'appareil peut être commandée par ledit signal de commande pour corriger une caractéristique de fréquence dudit signal d'entrée ; et
au moins un autre desdits moyens de traitement de signal ($F_2$) couplé en cascade à un desdits moyens de traitement de signal ($F_1$) pour que ledit signal corrigé dudit moyen d'addition (2) dans un desdits moyens de traitement de signal ($F_1$) soit appliqué à ladite première borne d'entrée dudit moyen de multiplication (1) dans ledit autre moyen de traitement de signal ($F_2$), et ledit signal de commande dudit second moyen d'entrée (CNT, la) est appliqué de façon commune à ladite seconde borne d'entrée dudit moyen de multiplication (1) dans chacun desdits moyens de traitement de signal ($F_1$, $F_2$).

2. Appareil pour corriger une caractéristique de fréquence selon la revendication 1 caractérisé par
un moyen de détection de crête (22) pour détecter une valeur de crête desdits circuits de traitement de signal ($F_1$, $F_2$, ... $F_N$), une sortie dudit moyen de détection de crête (22) étant appliquée audit second moyen d'entrée (CNT, 10) comme un signal de commande.

# F I G. 1

# F I G. 2

# F I G. 5

## FIG. 3

## FIG. 4

FIG. 6

FIG. 7

R1
C1

R2
C2

C_EX
Hold C.

Equalizer
Input

Equalizer
Output

Offset

EP 0 413 934 B1

FIG. 8A

FIG. 8B

1 nanosecond

FIG. 9A

FIG. 9B

F I G. 10A

F I G. 10B

F I G. 11A

F I G. 11B